# EUROPEAN PATENT SPECIFICATION

(11) **EP 4 419 879 B1**
(45) Date of publication and mention of the grant of the patent: **30.07.2025**
(21) Application number: 21790055.4
(22) Date of filing: 22.10.2021
(51) Int. Cl.: G01M 3/26, A24F 40/70, A24F 40/80

(54) **METHOD OF TESTING AIR LEAKAGE**
VERFAHREN ZUR PRÜFUNG VON LUFTLECKAGEN
PROCÉDÉ DE TEST DE FUITE D'AIR

(43) Date of publication of application: 28.08.2024
(73) Proprietor: Philip Morris Products S.A., 2000 Neuchâtel (CH)
(72) Inventor: AW, Sze Chiek, Singapore 569873 (SG); YEO, Chow Kian, Singapore 569873 (SG)
(74) Representative: Reddie & Grose LLP
(86) International application number: PCT/CN2021/125787
(87) International publication number: WO 2023/065322

(56) References cited:
- EP-A1- 3 738 456
- WO-A1-2020/115322
- DE-A1- 102006 027 344
- GB-A- 2 306 671
- US-A- 5 438 862
- US-A1- 2011 058 986
- US-A1- 2011 247 398
- US-A1- 2012 150 455
- US-A1- 2014 060 554
- US-A1- 2015 346 049
- US-A1- 2020 154 588

## Description

The present disclosure relates to a method of quality testing an airflow path defined in a product. The product may be a heater assembly for an aerosol-generating device, or an aerosol-generating device. The present disclosure further relates to a heater assembly and an aerosol-generating device comprising a heater assembly.

Aerosol generating devices which heat an aerosol-forming substrate to produce an aerosol without burning the aerosol-forming substrate are known in the art. The aerosol-forming substrate is typically provided within an aerosol-generating article, together with other components such as filters. The aerosol-generating article may have a rod shape for insertion of the aerosol-generating article into a heating chamber of the aerosol-generating device. A heating element is typically arranged in or around the heating chamber for heating the aerosol-forming substrate once the aerosol-generating article is inserted into the heating chamber of the aerosol-generating device.

The heating chamber may be arranged within a housing of the aerosol-generating device and form part of an airflow pathway through the aerosol-generating device. It is known to provide seals around the airflow pathway and between the heating chamber and the housing to seek to prevent aerosol from leaking out of the airflow pathway and into other parts of the aerosol-generating device, which may cause damage to the electronics of the device. The seals may be placed in direct contact with the heating chamber and consequently are generally formed from a heat resistant polymer such as silicone or polysiloxane. However, exposing such polymer seals to the heating temperatures of the heating chamber may generate undesirable by-products which may contaminate the aerosol. Furthermore, such heating temperatures may degrade the seals over time.

Polymer seals located between the heating chamber and a housing of the device may provide a heat conduction path, which transfers heat away from the heating chamber to the materials surrounding the heating chamber. This lost heat reduces the heat available for heating the aerosol-forming substrate and reduces the efficiency of the aerosol-generating device.

An additional problem encountered with sealing airflow pathways within aerosol-generating devices is manufacturing tolerances. Variation in the dimensions of components due to manufacturing tolerances may result in poor engagement between components and potentially gaps through which aerosol may leak. Achieving a good sealing engagement between components typically requires strict manufacturing tolerances which may be difficult to achieve in rapid manufacturing processes such as injection moulding. Variation in the dimensions of products may also result in inconsistent quality of products. That is, some products may have leakage problems whereas others may not. It would be desirable to provide a consistent quality of product to a consumer.

EP 3 738 456 A1 relates to a device with liquid flow restriction for controlling electrical power supply in response to air pressure measurement. The device includes an airflow path, a chamber having an aperture, a liquid flow restrictor configured to inhibit ingress of liquid into the chamber via the aperture, a pressure sensor located in the chamber or airflow channel and operable to detect, in the presence of the liquid flow restrictor, air pressure changes caused by air flow in the airflow path.

WO 2020/115322 A1 relates to an atomiser for an electrically heated aerosol-generating system that produces aerosol for user inhalation. The system comprises an atomiser housing defining an air inlet and an air outlet, a reservoir portion for containing an aerosol-forming substrate in a condensed form and an airflow passage extending in a longitudinal direction between the air inlet and the air outlet. The atomiser housing also defines a planar fluid-permeable heating element, supported by a heater mount. The mesh heating element is positioned between the airflow passage and the reservoir.

US 2014/060554 A1 relates to an electronic smoking article that provides for improved aerosol delivery, and further relates to methods of forming an aerosol in a smoking article. Particularly, the article comprises one or more microheaters in connection with an electrical power source and used to heat the aerosol precursor composition. The article can also comprise a control component that actuates current flow from the electrical power source to the microheater. The control component can comprise a puff-actuated sensor.

US 2015/346049 A1 relates to a quantitative leak detection system which includes a test equipment assembly connected to a leak detection assembly, which is connected to a data analyzer. The test equipment assembly, included in the system, comprises a component with a first conduit at a first end of the component and a second conduit at a second end of the component. The conduits may be connected to the leak detection assembly such that the conduits allow pressure and/or fluid flow rate within the component to be monitored by the leak detection assembly.

GB 2 306 671 A relates to a method and apparatus for testing a fluid conduit system, such as a domestic fuel gas supply system or installation, for gas leaks and, more particularly, for monitoring and determining the volumetric leakage rate of gas from such a system or installation. The apparatus consists of a fluid conduit connecting the fluid inlet to a pressure sensing means. The pressure sensing means is connected to a micro-controller via an amplifier which allows multiple operating sequences. The method of determining the rate of leakage of fluid from a leaking fluid containing system comprises pressurising the system, terminating the pressurisation and monitoring from a start time and pressure a first drop in pressure in the system and determining the time taken for the pressure to drop.

US 2012/150455 A1 relates to a system and method for determining leaks in a complex system including a leak detection system, a fluid pumping system and a computer system. The system includes a fluid pumping unit coupled to the pressure system so that the fluid pumping unit can introduce a sufficient volume of test fluid into the pressure system. A flow meter is coupled to the pumping unit to sense the amount of fluid being added to the pressure system. The flow meter senses the flow rate and/or determines the volume of the test fluid pumped into the pressure system and transmits a signal reflective of those values to the computer system for recording and storage on the computer readable medium. At least one pressure sensor is in fluid communication with the pressure system and in electrical communication with the computer system. The pressure sensor can sense the pressure of the fluid within the pressure system and transmit a signal reflective of the pressure to the computer system before, during, and after the fluid pumping unit pumps the test fluid into the pressure system.

DE 10 2006 027 344 A1 relates to a leakage rate determining method e.g. for closed gas system. The method involves having gas supply locked off and measuring pressure, in particular the decrease of pressure in an existing gas system is measured. The system consists of one or more containers and pipes and has a total volume and a system pressure. The gas system includes a gas supply line and shut off valve. The gas system has a leak detected by the device. The device detecting the leak rate of the gas system has a pressure measuring device and a flow element connected to the gas system via a connection line.

The invention is defined in the appended independent claims, to which reference should now be made. Optional features of the invention are defined in dependent claims. Aspects, embodiments or examples falling outside the scope of the appended independent claims are not part of the invention, and are merely included for illustrative or explanatory purposes.

According to an example of the present disclosure, there is provided a method of quality testing an airflow path defined in a product. The product comprises a plurality of component parts, each defining a portion of the airflow path. The plurality of component parts are joined together to form the product. The method comprises steps of pressurising the airflow path to a predetermined pressure, measuring leakage from the pressurised airflow path for a predetermined period of time, determining a leakage rate over the predetermined period of time, and determining whether the leakage rate is greater than a permissible threshold leakage rate.

A product such as a heater assembly for an aerosol-generating device, or an aerosol-generating device comprising such a heater assembly will typically be made in high volume and from component parts that are themselves made in high volume by processes such as injection moulding. These products incorporate an airflow path, and satisfactory use of the products may rely on a competent airflow path. A reliable competent airflow path may typically be achieved by use of polymer seals (e.g. silicone seals). As mentioned above, however, such seals may be undesirable in some circumstances. By quality testing the airflow path in products, those products with non-competent airflow paths, that is airflow paths that leak to a degree that prevents satisfactory use of the product, can be discarded. The quality testing method may conveniently be an automated quality testing method. The quality testing method may conveniently be included as part of a manufacturing process for the product.

The product may define an airflow inlet and an airflow outlet. If the product is an aerosol-generating device, for example, the airflow inlet may allow air to be drawn into the aerosol-generating device and the airflow outlet may be associated with an opening for receiving an aerosol-generating article. Airflow, and any aerosol generated, may exit the opening via an aerosol-generating article received in aerosol-generating device.

The airflow path may have an airflow inlet defined through a first of the plurality of component parts and an airflow outlet defined through a second of the plurality of component parts. The airflow path may be defined by passageways in more than one of the plurality of component parts. Passageways in adjacent component parts may be located at joints, and may be linked when the plurality of component parts are assembled. Joints between component parts may be the most likely sites for a leak from the airflow path. A product may have a plurality of joints between component parts and, therefore, many candidates for leaks from the airflow path.

At least two of the plurality of component parts may be joined together by mechanical press-fit interfaces to form the product. Such interfaces may also be known as interference interfaces or interference joints. A press-fit interface may be held together purely by interference between two components, or may rely on a pressure applied by a fixture such as a screw or clasp.

The airflow path may be pressurised to a predetermined pressure of between 0.2 kPa and 1 kPa. The pressure needs to be great enough that a leak can be determined, but not so great as to damage the product. The predetermined pressure may be, for example, between 0.3 kPa and 0.9 kPa, for example between 0.35 kPa and 0.8 kPa, for example between 0.4 kPa and 0.7 kPa, for example between 0.45 kPa and 0.6 kPa. It may be preferred that the airflow path is pressurised to a predetermined pressure of between 0.45 kPa and 0.55 kPa, for example about 0.5 kPa.

Leakage from the pressurised airflow path may be measured for a period of time of between 1 second and 4 seconds, for example between 1.5 seconds and 3 seconds, for example for about 2 seconds.

The permissible threshold leakage level may be 5 ml/min. Any leakage at a level lower than the permissible threshold leakage level may be considered acceptable. That is, a product in which leakage from the airflow path is less than the permissible threshold leakage level may be considered to have a competent airflow path. The permissible threshold leakage level may vary depending on the nature of the product. It may be preferable that the permissible threshold leakage level is 4.5 ml/min, or 4 ml/min, or 3 ml/min, or 2.5 ml/min, or 2 ml/min, or 1.5 ml/min, or 1 ml/min. For a heater assembly or an aerosol-generating device comprising a heater assembly, it may be preferred that the permissible threshold leakage level does not exceed 3 ml/min.

The airflow path may be pressurised by a gas, for example by air. Air may be conveniently supplied from a source of compressed air, for example a pressurised air cylinder.

The product may be inserted into a jig or testing apparatus to conduct the quality testing on the airflow path of the product. The jig or testing apparatus is preferably configured for the specific dimensions of the product being tested. The jig or testing apparatus may comprise connections for connection to the airflow path. One of the airflow inlet and the airflow outlet may be blocked and the other one of the airflow inlet and the airflow outlet may be coupled to a supply of pressurised gas, for example pressurised air, in order to pressurise the airflow path.

The step of pressurising the airflow path to a predetermined pressure may include pressurising the airflow path to the predetermined pressure for a predetermined stabilisation time. The predetermined stabilisation time may be between 2 and 5 seconds, for example between 2.5 and 4 seconds, for example about 3 seconds.

The step of measuring leakage from the pressurised airflow path may involve monitoring pressure within the pressurised airflow path. For example, a pressure sensor or flow meter may be coupled to the pressurised airflow path such that it can monitor pressure or airflow within the pressurised airflow path. By way of example only, a commercially available pressure monitor such as the Furness FCO752 may be used. The Furness FCO752 provides an accuracy of +/-0.02ml and a maximum leakage resolution of 0.001ml/min.

The product may be coupled to a test circuit. The test circuit may form part of a jig or test apparatus. The test circuit may comprise a source of pressurising gas, for example an air cylinder. The test circuit may also comprise one or more of a pressure regulator, a coupling for allowing the test circuit to be coupled to the airflow path, a first valve operable to allow the airflow path to be pressurised, and a second valve operable to allow the airflow path to be depressurised. The method may comprise steps of opening the first valve to pressurise the airflow path to the predetermined pressure for a predetermined stabilisation time, closing the first valve, measuring leakage from the pressurised airflow path for the predetermined period of time after the first valve is closed, and opening the second valve to allow the airflow path to be depressurised. The method may comprise steps of opening the first valve to pressurise the airflow path to the predetermined pressure for a predetermined stabilisation time, closing the first valve, determining leakage flow within the pressurised airflow path for the predetermined period of time after the first valve is closed, and opening the second valve to allow the airflow path to be depressurised.

The product may be rejected if the leakage rate is equal to or greater than the permissible threshold leakage rate. Alternatively, the product may be reworked, refitted, or refurbished if the leakage rate is equal to or greater than the permissible threshold leakage rate. The term refurbished shall be used for all such processes in which the product is not completely discarded but is reworked or refitted in a manner aimed at resolving any leakage problems identified by the quality testing method. A refurbished product may be retested. That is, the refurbished product may be sent through the airflow path quality test again to determine whether the leakage rate has improved sufficiently following refurbishment.

The method may assign a different permissible threshold leakage rate to determine whether a product is refurbished. For example, a product may be considered to have a competent airflow path if the leakage rate is lower than the threshold leakage rate. A product may be considered to be eligible for refurbishment if the leakage rate is equal to or greater than the permissible leakage threshold but lower than a refurbishment leakage threshold. The refurbishment leakage threshold for a product is greater than the permissible leakage threshold for the same product. If the leakage rate equals or exceeds the refurbishment leakage threshold, the product may be discarded.

In preferred embodiments, the predetermined pressure may be between 0.45 kPa and 0.55 kPa, for example about 0.5 kPa and the permissible threshold leakage rate may be 3 ml/min, or 2 ml/min, or 1 ml/min.

In some embodiments, the method may be performed at an elevated temperature compared to ambient temperature. The competence of a seal formed between component parts of a product may vary with temperature. It may be desirable to assess the competence of an airflow path at an elevated temperature so as to replicate operational conditions. Thus, the gas supplied to pressurise the airflow path may be heated, for example heated to a temperature of greater than 100 degrees Centigrade, for example, greater than 150 degrees Centigrade, for example greater than 200 degrees Centigrade. Where the product comprises a heater, the heater may be actuated during the method of quality testing to increase the temperature of the product being tested.

In some embodiments, the product may be a heater assembly for an aerosol-generating device. The heater assembly may be a component part of an aerosol-generating device.

As an example, the heater assembly may comprise a first heater casing comprising an air inlet, a second heater casing comprising an aerosol outlet, and a heating chamber for heating an aerosol-forming substrate. The heating chamber may be in fluid communication with both the air inlet and aerosol outlet to define the airflow path through the heater assembly.

The heating chamber may be arranged between the first and second heater casings; and the first and second heater casings may be attached to each other by a mechanical press fit.

The heating chamber may be arranged between the first and second heater casings; and the first and second heater casings may be attached to each other by a fastener. The fastener may be configured to exert an axial force on the first and second heater casings to urge axially opposing internal surfaces of the first and second heater casings into sealing engagement with respective axially opposing end surfaces of the heating chamber to seal the airflow pathway. The fastener may comprise a threaded fastener or a snap-fit fastener.

The heater assembly may comprise a plurality of fasteners. The plurality of fasteners may be symmetrically spaced around an outer perimeter of the first and second heater casings.

The first heater casing, the second heater casing and the heating chamber may each comprise an airflow channel, the airflow channels communicating so as to define the airflow pathway together.

The heating chamber may comprise a tubular heating chamber. The tubular heating chamber may have a tubular wall thickness of between 0.05 millimetres and 1.00 millimetres, preferably between 0.05 millimetres and 0.50 millimetres and more preferably about 0.10 millimetres.

The heating chamber may be made from any suitable material including, but not limited to, a ceramic or metal or metal alloy. An example of a suitable material is stainless steel.

The heater assembly may comprise at least one electric heating element for heating an aerosol-forming substrate. The heater assembly may comprise a plurality of electric heating elements. The electric heating element or elements may be arranged around or circumscribe an external surface of the heating chamber. The electric heating element or elements may be arranged around or circumscribe an internal surface of the heating chamber. The electric heating element or elements may be part of, or integral to, the heating chamber.

The electric heating element or elements may comprise an electrically resistive material. Suitable electrically resistive materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, nickel-, cobalt-, chromium-, aluminium- titanium- zirconium-, hafnium-, niobium-, molybdenum-, tantalum-, tungsten-, tin-, gallium-, manganese-, gold- and iron-containing alloys, and super-alloys based on nickel, iron, cobalt, stainless steel, Timetal^{™}, Kanthal^{™} and other iron-chromium-aluminium alloys, and iron-manganese-aluminium based alloys. In composite materials, the electrically resistive material may optionally be embedded in, encapsulated or coated with an insulating material or vice-versa, depending on the kinetics of energy transfer and the external physicochemical properties required.

The one or more heating elements may be formed using a metal or metal alloy having a defined relationship between temperature and resistivity. Heating elements formed in this manner may be used to both heat and monitor the temperature of the heating element during operation.

The heating element may be deposited in or on a rigid carrier material or substrate. The heating element may be deposited in or on a flexible carrier material or substrate. The heating element may be formed as a track on a suitable insulating material, such as ceramic or glass or polyimide film. The heating element may be sandwiched between two insulating materials.

The heater assembly may comprise a flexible heating element arranged around or circumscribing an external surface of the heating chamber. The flexible heating element may have a length substantially equal to the length of the aerosol-forming substrate provided in the aerosol-generating article. The heating chamber may be longer than the heating element. The heating chamber may have at least one end portion which is not covered or circumscribed by the heating element. An end portion may be provided at both ends of the heating chamber which is not covered or circumscribed by the heating element. The end portion or portions may act as spacer portions to prevent direct contact between the heating element and other components of the heater assembly. The end portion or portions may each have a length of less than 2 millimetres, preferably less than 1 millimetre and preferably about 0.5 millimetres. Advantageously, the spacer portions will be at a lower temperature during heating than the portion of the heating chamber covered or circumscribed by the heating element. The spacer portions may comprise the funnel-shaped end portions or the stepped end portions.

In some embodiments, the product may be an aerosol-generating device. A heater assembly may be a component part of the aerosol-generating device. The aerosol-generating device may comprises a housing locating a heater assembly and a power supply for supplying electrical power to the heater assembly. The heater assembly may be a heater assembly as described above. The aerosol-generating device may define the airflow path between an aerosol-generating device inlet and an aerosol-generating device outlet. The airflow path may comprise the airflow path defined through the heater assembly.

The power supply may be any suitable power supply, for example a DC voltage source. In one embodiment, the power supply is a Lithium-ion battery. Alternatively, the power supply may be a Nickel-metal hydride battery, a Nickel cadmium battery, or a Lithium based battery, for example a Lithium-Cobalt, a Lithium-Iron-Phosphate or a Lithium-Polymer battery.

The aerosol-generating device is preferably a handheld aerosol-generating device that is comfortable for a user to hold between the fingers of a single hand.

The aerosol-generating device may further comprise control circuitry configured to control a supply of electrical power to the heater assembly. The control circuitry may comprise a microprocessor. The microprocessor may be a programmable microprocessor, a microcontroller, or an application specific integrated chip (ASIC) or other electronic circuitry capable of providing control. The control circuitry may comprise further electronic components. For example, in some embodiments, the control circuitry may comprise any of: sensors, switches, display elements. Power may be supplied to the heater assembly continuously following activation of the device or may be supplied intermittently, such as on a puff-by-puff basis. The power may be supplied to the heater assembly in the form of pulses of electrical current, for example, by means of pulse width modulation (PWM).

The aerosol-generating device may comprise a device housing. The device housing may contain the heater assembly, power supply and control circuitry. The housing may comprise an opening for receiving an aerosol-generating article. The opening may be connected to the aerosol outlet of the second heater casing of the heater assembly to allow for insertion of an aerosol-generating article into the heating chamber. The housing may comprising an air inlet. The air inlet may be connected to the air inlet of the first heater casing of the heater assembly.

The housing may comprise any suitable material or combination of materials. Examples of suitable materials include metals, alloys, plastics or composite materials containing one or more of those materials, or thermoplastics that are suitable for food or pharmaceutical applications, for example polypropylene, polyetheretherketone (PEEK) and polyethylene. The material is preferably light and non-brittle.

According to a further example of the present disclosure, there is provided a method of manufacturing a heater assembly for an aerosol-generating device. The method comprises steps of providing a first heater casing comprising an air inlet; providing a second heater casing comprising an aerosol outlet; providing a heating chamber for heating an aerosol-forming substrate and arranging the heating chamber such that it is in fluid communication with both the air inlet and the air outlet to define an airflow path through the heater assembly; arranging the heating chamber between the first and second heater casings; attaching the first and second heater casings to each other; and quality testing the airflow path defined through the heater assembly by; pressurising the airflow path to a predetermined pressure; measuring leakage from the pressurised airflow path for a predetermined period of time; determining a leakage rate over the predetermined period of time; and determining whether the leakage rate is equal to or greater than a permissible threshold leakage rate.

The method may further comprise the step of refurbishing or discarding any heater assembly in which the leakage rate is equal to or greater than a permissible threshold leakage rate. The step of quality testing the airflow path defined through the heater assembly may be conducted according to the method disclosed above.

According to a further example of the present disclosure, there is provided a heater assembly formed by a method of manufacturing a heater assembly for an aerosol-generating device as disclosed above.

According to a further example of the present disclosure, there is provided a method of manufacturing an aerosol-generating device, the method comprising steps of: providing a housing; providing a heater assembly; providing a power supply for supplying electrical power to the heater assembly; arranging the heating chamber and the power supply within the housing such that an airflow path is defined between an airflow inlet of the aerosol-generating device and an airflow outlet of the aerosol-generating device, the airflow path comprising an airflow pathway through the heater assembly; and quality testing the airflow path defined through the aerosol-generating device by; pressurising the airflow path to a predetermined pressure; measuring leakage from the pressurised airflow path for a predetermined period of time; determining a leakage rate over the predetermined period of time; and determining whether the leakage rate is equal to or greater than a permissible threshold leakage rate.

The method may further comprise the step of refurbishing or discarding any aerosol-generating device in which the leakage rate is equal to or greater than a permissible threshold leakage rate. The step of quality testing the airflow path defined through the heater assembly may be conducted according to the method disclosed above.

According to a further example of the present disclosure, there is provided an aerosol-generating device formed by a method a method of manufacturing an aerosol-generating device as disclosed above.

According to a further example of the present disclosure, there is provided an aerosol-generating device formed by a method a method of manufacturing an aerosol-generating device as disclosed above comprising a heater assembly formed by a method of manufacturing a heater assembly for an aerosol-generating device as disclosed above.

Aerosol-generating devices as disclosed herein may preferably be used in conjunction with disposable aerosol-generating articles comprising an aerosol-forming substrate. An aerosol-generating system may comprise an aerosol-generating device as disclosed herein and an aerosol-generating article configured for use with eth aerosol-generating device.

The terms "distal", "upstream" "proximal" and "downstream" are used to describe the relative positions of components, or portions of components, of an aerosol-generating device or an aerosol generating article. Aerosol generating articles and devices according to the present disclosure may have a proximal end through which, in use, an aerosol exits the article or device for delivery to a user, and may have an opposing distal end. The proximal end of the aerosol generating article and device may also be referred to as the mouth end. In use, a user draws on the proximal end of the aerosol generating article in order to inhale an aerosol generated by the aerosol generating article or device. The terms upstream and downstream are relative to the direction of aerosol movement through the aerosol generating article or aerosol-generating device when a user draws on the proximal end of the aerosol-generating article. The proximal end of the aerosol-generating article is downstream of the distal end of the aerosol-generating article. The proximal end of the aerosol-generating article may also be referred to as the downstream end of the aerosol-generating article and the distal end of the aerosol-generating article may also be referred to as the upstream end of the aerosol-generating article.

According to an example of the present disclosure, there is provided an aerosol-generating system comprising an aerosol-generating device according to any of the examples described above. The aerosol-generating system may comprise an aerosol-generating article comprising an aerosol-forming substrate.

According to an example of the present disclosure, there is provided an aerosol-generating system comprising: an aerosol-generating device according to any of the examples described above; and an aerosol-generating article comprising an aerosol-forming substrate.

As used herein, the term "aerosol-generating article" refers to an article comprising an aerosol-forming substrate that, when heated in an aerosol-generating device, releases volatile compounds that can form an aerosol. An aerosol-generating article is separate from and configured for combination with an aerosol-generating device for heating the aerosol-generating article.

The aerosol-generating article may be substantially cylindrical in shape. The aerosol-generating article may be substantially elongate. The aerosol-forming substrate may be substantially cylindrical in shape. The aerosol-forming substrate may be substantially elongate.

The aerosol-generating article may have a total length between approximately 30 mm and approximately 100 mm. The aerosol-generating article may have an external diameter between approximately 5 mm and approximately 12 mm. The aerosol-forming substrate may have a length of between approximately 10 mm and approximately 18 mm. Further, the diameter of the aerosol-forming substrate may be between approximately 5 mm and approximately 12 mm. The aerosol-generating article may comprise a filter plug. The filter plug may be located at the downstream end of the aerosol-generating article. The filter plug may be a cellulose acetate filter plug. The filter plug is approximately 7 mm in length in one embodiment, but may have a length of between approximately 5 mm to approximately 12 mm.

In one embodiment, the aerosol-generating article may have a total length of approximately 45 mm. The aerosol-generating article may have an external diameter of approximately 7.3 mm but may have an external diameter of between approximately 7.0 mm and approximately 7.4 mm. Further, the aerosol-forming substrate may have a length of approximately 12 mm. Alternatively, the aerosol-forming substrate may have a length of approximately 16 mm. The aerosol-generating article may comprise an outer paper wrapper. Further, the aerosol-generating article may comprise a separation between the aerosol-forming substrate and the filter plug. The separation may be approximately 21 mm or approximately 26 mm, but may be in the range of approximately 5 mm to approximately 28 mm. The separation may be provided by a hollow tube. The hollow tube may be a made from cardboard or cellulose acetate.

The aerosol-forming substrate may be a solid aerosol-forming substrate. Alternatively, the aerosol-forming substrate may comprise both solid and liquid components. The aerosol-forming substrate may comprise a tobacco-containing material containing volatile tobacco flavour compounds which are released from the substrate upon heating. Alternatively, the aerosol-forming substrate may comprise a non-tobacco material. The aerosol-forming substrate may further comprise an aerosol former. Examples of suitable aerosol formers are glycerine and propylene glycol.

If the aerosol-forming substrate is a solid aerosol-forming substrate, the solid aerosol-forming substrate may comprise, for example, one or more of: powder, granules, pellets, shreds, spaghettis, strips or sheets containing one or more of: herb leaf, tobacco leaf, fragments of tobacco ribs, reconstituted tobacco, homogenised tobacco, extruded tobacco and expanded tobacco. The solid aerosol-forming substrate may be in loose form, or may be provided in a suitable container or cartridge. Optionally, the solid aerosol-forming substrate may contain additional tobacco or non-tobacco volatile flavour compounds, to be released upon heating of the substrate. The solid aerosol-forming substrate may also contain capsules that, for example, include the additional tobacco or non-tobacco volatile flavour compounds and such capsules may melt during heating of the solid aerosol-forming substrate.

As used herein, homogenised tobacco refers to material formed by agglomerating particulate tobacco. Homogenised tobacco may be in the form of a sheet. Homogenised tobacco material may have an aerosol-former content of greater than 5% on a dry weight basis. Homogenised tobacco material may alternatively have an aerosol former content of between 5% and 30% by weight on a dry weight basis. Sheets of homogenised tobacco material may be formed by agglomerating particulate tobacco obtained by grinding or otherwise comminuting one or both of tobacco leaf lamina and tobacco leaf stems. Alternatively, or in addition, sheets of homogenised tobacco material may comprise one or more of tobacco dust, tobacco fines and other particulate tobacco by-products formed during, for example, the treating, handling and shipping of tobacco. Sheets of homogenised tobacco material may comprise one or more intrinsic binders, that is tobacco endogenous binders, one or more extrinsic binders, that is tobacco exogenous binders, or a combination thereof to help agglomerate the particulate tobacco; alternatively, or in addition, sheets of homogenised tobacco material may comprise other additives including, but not limited to, tobacco and non-tobacco fibres, aerosol-formers, humectants, plasticisers, flavourants, fillers, aqueous and non-aqueous solvents and combinations thereof.

In a particularly preferred embodiment, the aerosol-forming substrate comprises a gathered crimpled sheet of homogenised tobacco material. As used herein, the term 'crimped sheet' denotes a sheet having a plurality of substantially parallel ridges or corrugations. Preferably, when the aerosol-generating article has been assembled, the substantially parallel ridges or corrugations extend along or parallel to the longitudinal axis of the aerosol-generating article. This advantageously facilitates gathering of the crimped sheet of homogenised tobacco material to form the aerosol-forming substrate. However, it will be appreciated that crimped sheets of homogenised tobacco material for inclusion in the aerosol-generating article may alternatively or in addition have a plurality of substantially parallel ridges or corrugations that are disposed at an acute or obtuse angle to the longitudinal axis of the aerosol-generating article when the aerosol-generating article has been assembled. In certain embodiments, the aerosol-forming substrate may comprise a gathered sheet of homogenised tobacco material that is substantially evenly textured over substantially its entire surface. For example, the aerosol-forming substrate may comprise a gathered crimped sheet of homogenised tobacco material comprising a plurality of substantially parallel ridges or corrugations that are substantially evenly spaced-apart across the width of the sheet.

Optionally, the solid aerosol-forming substrate may be provided on or embedded in a thermally stable carrier. The carrier may take the form of powder, granules, pellets, shreds, spaghettis, strips or sheets. Alternatively, the carrier may be a tubular carrier having a thin layer of the solid substrate deposited on its inner surface, or on its outer surface, or on both its inner and outer surfaces. Such a tubular carrier may be formed of, for example, a paper, or paper like material, a non-woven carbon fibre mat, a low mass open mesh metallic screen, or a perforated metallic foil or any other thermally stable polymer matrix.

The solid aerosol-forming substrate may be deposited on the surface of the carrier in the form of, for example, a sheet, foam, gel or slurry. The solid aerosol-forming substrate may be deposited on the entire surface of the carrier, or alternatively, may be deposited in a pattern in order to provide a non-uniform flavour delivery during use.

Although reference is made to solid aerosol-forming substrates above, it will be clear to one of ordinary skill in the art that other forms of aerosol-forming substrate may be used with other embodiments. For example, the aerosol-forming substrate may be a liquid aerosol-forming substrate. If a liquid aerosol-forming substrate is provided, the aerosol-generating device preferably comprises means for retaining the liquid. For example, the liquid aerosol-forming substrate may be retained in a container or a liquid storage portion. Alternatively or in addition, the liquid aerosol-forming substrate may be absorbed into a porous carrier material. The porous carrier material may be made from any suitable absorbent plug or body, for example, a foamed metal or plastics material, polypropylene, terylene, nylon fibres or ceramic. The liquid aerosol-forming substrate may be retained in the porous carrier material prior to use of the aerosol-generating device or alternatively, the liquid aerosol-forming substrate material may be released into the porous carrier material during, or immediately prior to use. For example, the liquid aerosol-forming substrate may be provided in a capsule. The shell of the capsule preferably melts upon heating and releases the liquid aerosol-forming substrate into the porous carrier material. The capsule may optionally contain a solid in combination with the liquid.

Alternatively, the carrier may be a non-woven fabric or fibre bundle into which tobacco components have been incorporated. The non-woven fabric or fibre bundle may comprise, for example, carbon fibres, natural cellulose fibres, or cellulose derivative fibres.

Features described in relation to one of the above examples may equally be applied to other examples of the present disclosure.

Examples will now be further described with reference to the figures in which:
Figure 1 is a schematic cross-sectional view showing the interior of an aerosol-generating device according to an example of the present disclosure and an aerosol-generating article received within the aerosol-generating device;
Figure 2 is an exploded perspective view of a heater assembly for use as a component part of the aerosol-generating device of Figure 1;
Figure 3 is a schematic illustration showing elements of a quality testing apparatus coupled to a product (for example a heater assembly or an aerosol-generating device) for testing;
Figure 4 is a flowchart illustrating the step by step process for quality testing an airflow path of a product using the apparatus of figure 3;
Figure 5 is a flowchart illustrating the step by step process of manufacturing a heater assembly for an aerosol-generating device; and
Figure 6 is a flowchart illustrating the step by step process of manufacturing an aerosol-generating device.

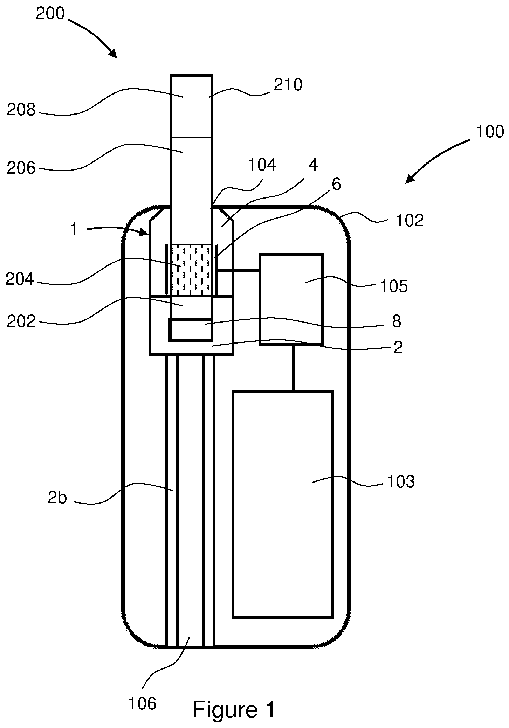

Figure 1 is a schematic cross-sectional view showing the interior of an aerosol-generating device 100, and an aerosol-generating article 200 received within the aerosol-generating device 100. Together, the aerosol-generating device 100 and aerosol-generating article 200 form an aerosol-generating system. In Figure 1, the aerosol-generating device 100 is shown in a simplified manner. In particular, the elements of the aerosol-generating device 100 are not drawn to scale. Furthermore, elements that are not relevant for the understanding of the aerosol-generating device 100 have been omitted.

The aerosol-generating device 100 comprises a housing 102 containing a heater assembly 1, a power supply 103, and control circuitry 105. In Figure 1, the heater assembly 1 can be seen to comprise a first heater casing 2, a heating chamber 6, a heater mount 8 and a second heater casing 4. The heating chamber 6 has a flexible heating element (not shown) arranged around it for heating the heating chamber 6. The power supply 103 is a battery and, in this example, is a rechargeable lithium ion battery. The control circuitry 105 is connected to both the power supply 103 and the heating element and controls the supply of electrical energy from the power supply 103 to the heating element to regulate the temperature of the heating element.

The housing 102 comprises an opening 104 at a proximal or mouth end of the aerosol-generating device 100 through which an aerosol-generating article 200 is received. The opening 104 is connected to an opening in the heater assembly 1, via which aerosol exits the heater assembly 1. The opening may be considered to be an air outlet of the aerosol-generating device. However, it will be appreciated that aerosol largely exits the heater assembly 1 and the aerosol-generating device 100 via the aerosol-generating article 200. The housing 102 further comprises an air inlet 106 at a distal end of the aerosol-generating device 100. The air inlet 106 is connected to the air inlet arranged at a distal end of a first tubular section 2b of the first heater casing 2. The first tubular section 2b delivers air from the air inlet 106 to the heating chamber 6.

The aerosol-generating article 200 comprises an end plug 202, an aerosol-forming substrate 204, a hollow tube 206, and a mouthpiece filter 208. Each of the aforementioned components of the aerosol-generating article 100 is a substantially cylindrical element, each having substantially the same diameter. The components are arranged sequentially in abutting coaxial alignment and are circumscribed by an outer paper wrapper 210 to form a cylindrical rod. The aerosol-forming substrate 204 is a tobacco rod or plug comprising a gathered sheet of crimped homogenised tobacco material circumscribed by a wrapper (not shown). The crimped sheet of homogenised tobacco material comprises glycerine as an aerosol-former. The end plug 202 and mouthpiece filter 208 are formed from cellulose acetate fibres.

In use, a distal end of the aerosol-generating article 200 is inserted into the aerosol-generating device 100 via the opening 104 in the housing 102 and pushed into the aerosol-generating device 100 until it engages a stop (not shown in Figure 1) arranged on the heater mount 8, at which point it is fully inserted. The stop helps to correctly locate the aerosol-forming substrate 204 within the heating chamber 6 so that the heating chamber 6 can heat the aerosol-forming substrate 204 to form an aerosol.

The aerosol-generating device 100 may further comprise: a sensor (not shown) for detecting the presence of the aerosol-generating article 200; a user interface (not shown) such as a button for activating the heating element; and a display or indicator (not shown) for presenting information to a user, for example, remaining battery power, heating status and error messages.

In use, a user inserts an aerosol-generating article 200 into the aerosol-generating device 100, as shown in Figure 1. The user then starts a heating cycle by activating the aerosol-generating device 100, for example, by pressing a switch to turn the device on. In response, the control circuitry 105 controls a supply of electrical power from the power supply 103 to the heating element (not shown) to heat the heating element, which in turn heats the heating chamber 6. During a heating cycle, the heating element heats the heating chamber 6 to a predefined temperature, or to a range of predefined temperatures according to a temperature profile. A heating cycle may last for around 6 minutes. The heat from the heating chamber 6 is transferred to the aerosol-forming substrate 204 which releases volatile compounds from the aerosol-forming substrate 204. The volatile compounds form an aerosol within an aerosolisation chamber formed by the hollow tube 206. During a heating cycle, the user places the mouthpiece filter 208 of the aerosol-generating article 200 between the lips of their mouth and takes a puff or inhales on the mouthpiece filter 208. The generated aerosol is then drawn through the mouthpiece filter 102 into the mouth of the user.

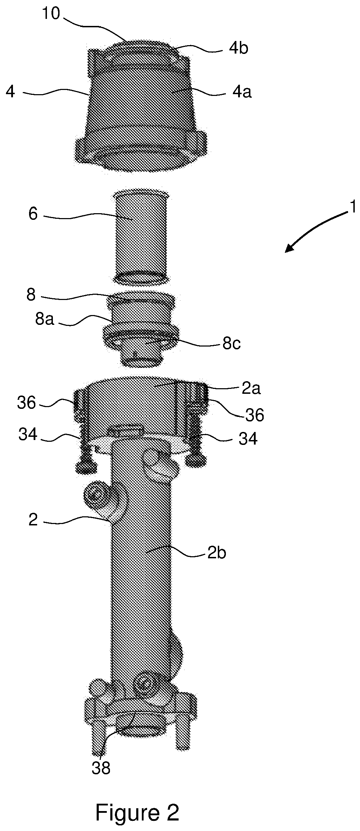

Figure 2 shows an exploded perspective view of the heater assembly 1 of Figure 1 prior to assembly. The components of the heater assembly 1, that is, the first heater casing 2, heater mount 8, heating chamber 6, and second heater casing 4, are shown axially spaced apart in Figure 2. To assemble the heater assembly 1, the heater mount 8 is mounted within a first hollow shell section 2a of the first heater casing 2. A hollow plug 8c which extends distally from the first side 8a of the heater mount 8 is press-fit into an internal recess (not shown) formed in a proximal end of the first tubular section 2b.

The heating chamber 6 is then press-fit into an internal recess (not shown in Figure 2) formed in proximal end wall of a second hollow shell section 4a of the second heater casing 4. A guide (not shown) is inserted internally through the second tubular section 4b of the second heater casing 4 and through the internal space within the heating chamber 6 to maintain the components in axial alignment. The second heater casing 4 and heating chamber 6 subassembly is then mounted on the subassembly comprising the first heater casing 2 and heater mount 8. A distal end of the guide is inserted into the internal airflow channel (not shown) of the heater mount 8 to maintain the components in alignment. The first 2 and second 4 heater casings are then attached to each other using two screws 34 and washers 36. The guide is then removed. Attaching the first 2 and second 4 heater casings exerts an axial force to keep the components of the heater assembly 1 in axial sealing engagement and to seal the airflow pathway through the heater assembly. The airflow pathway is therefore sealed between an air inlet 38 arranged at a distal end of the first tubular section 2b of the first heater casing 2 and an aerosol outlet 10 arranged at a proximal end of the second heater casing 4.

Once assembled, the integrity or competence of the airflow path within the heater assembly is tested. A quality testing apparatus for testing the competence of the airflow path comprises; a jig for receiving the heater assembly; a seal to block the airflow outlet of the heater assembly; a coupling to form a sealed coupling to the airflow inlet of the heater assembly; a supply of compressed air and associated regulators, conduits, and valves arranged to pressurise the airflow path of the heater assembly; and a pressure sensor or flow sensor arranged to detect changes of pressure or flow rates within the pressurised airflow path. In a specific embodiment, the pressure sensing measurements are obtained using a Furness FCO752 production line flow meter.

The quality testing apparatus may incorporate automation. For example, the heater assembly (or any other product being tested) may be automatically conveyed to the quality testing apparatus and inserted into the jig. The airflow outlet may then be sealed and the sealed coupling applied to the airflow inlet so that the testing procedure can be applied. Once testing is complete the heater assembly is removed from the jig and may be categorised depending on whether the airflow path was found to be competent or not.

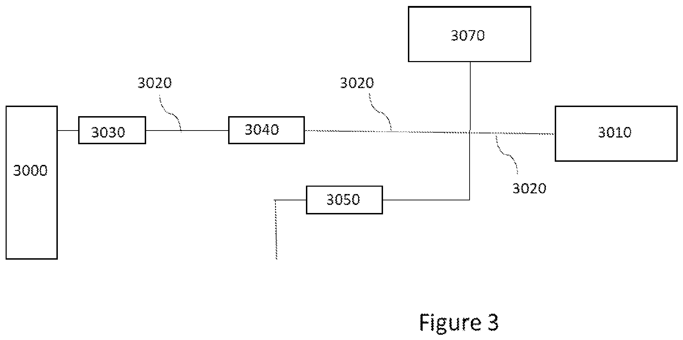

Figure 3 is a schematic illustration showing elements of the quality testing apparatus coupled to a product (for example a heater assembly or an aerosol-generating device) for testing. An air supply 3000 is coupled to the product 3010 by airlines or conduits 3020. Pressure from the air supply 3000 is controlled by a pressure regulator 3030. A first test valve 3040 is arranged between the air supply 3000 and the product 3010. By opening the first test valve 3040 the airflow path within the product 3010 is pressurised. The first test valve 3040 can then be closed. Leakage rate of the pressurised airflow path can be determined by a pressure sensor 3070 (for example a Furness FCO752) arranged within the pressurised section of the apparatus. Once the testing is completed, a release valve 3050 may be opened to release pressure within the system and allow the product 3010 to be removed from the apparatus.

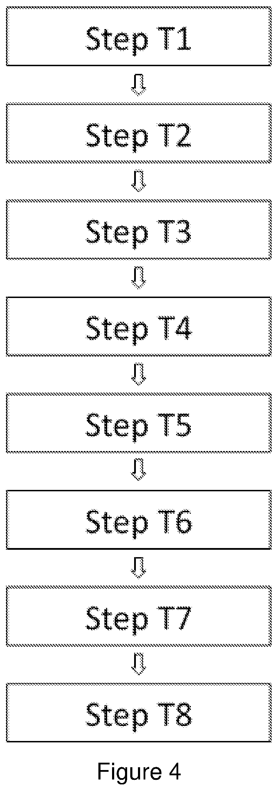

The step by step process for quality testing an airflow path of a product using the apparatus of figure 3, may be illustrated by the flowchart of figure 4.

Step T1: - The product 3010 is inserted into a jig of the testing apparatus and the airflow path of the product is coupled to a testing circuit of the apparatus. This may involve one of the airflow inlet or airflow outlet being blocked or sealed and the other of the airflow inlet or airflow outlet being coupled to a supply of compressed air.

Step T2: - The pressure regulator 3030 is set to deliver an air pressure of 0.5 kPa. The first test valve 3040 is opened and air passes through airlines 3020 to pressurise the airflow path of the product.

Step T3: - A pressure of 0.5 kPa is applied to the airflow path of the product for a stabilisation period of 3 seconds.

Step T4: - The first test valve 3040 is closed.

Step T5: - The pressure sensor 3070 monitors the pressure within the airflow path of the product for a test period of 2 seconds.

Step T6: - The leakage rate from the airflow path is calculated. If the leakage rate is less than 3 ml/min the airflow path is deemed to be competent and the product is passed as fit for use.

Step T7: - The release valve 3050 is opened to release remaining pressure.

Step T8: - The product is removed from the apparatus.
The method of quality testing described herein may be conveniently incorporated into a method of manufacture of a product. For example, the method of quality testing of an airflow path may form a late stage in a production line forming that product.

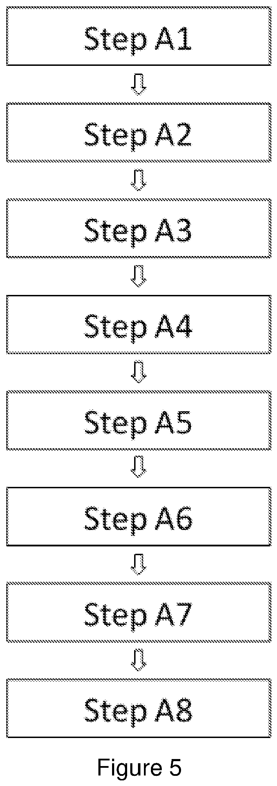

The step by step process of manufacturing a heater assembly for an aerosol-generating device may be illustrated by the flowchart of figure 5.

Step A1: - A first heater casing comprising an air inlet is provided.

Step A2:- A second heater casing comprising an air outlet, which may be termed an aerosol outlet, is provided.

Step A3: - A heating chamber for heating an aerosol-forming substrate is provided.

Step A4: - The heating chamber is arranged between the first heater casing and the second heater casing. The heating chamber is arranged in fluid communication with both the air inlet and the air outlet to define an airflow path through the heater assembly.

Step A5: - The first heater casing and the second heater casing are attached to each other, thereby forming the heater assembly.

Step A6: - The competence of the airflow path of the heater assembly is tested using the method set out in the flowchart of figure 4.

Step A7: - If the airflow path is deemed to be competent, the heater assembly may be sent for use as a component part of an aerosol-generating device.

Step A8: - If the airflow path is not deemed to be competent, the heater assembly may be sent for refurbishment or may be discarded.

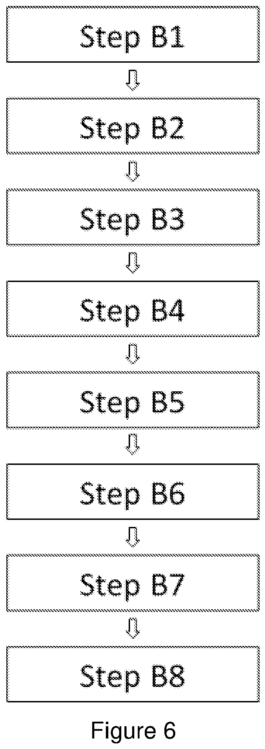

The step by step process of manufacturing an aerosol-generating device may be illustrated by the flowchart of figure 6.

Step B1: - A housing for the aerosol-generating device is provided. The housing defines an airflow inlet and an airflow outlet. The airflow outlet may also be termed an aerosol outlet.

Step B2:- A heating assembly for the aerosol-generating device is provided. The heating assembly defines an airflow path there through. The heating assembly may be a heating assembly formed by the method illustrated in figure 5.

Step B3: - A power supply for supplying electrical power to the heater is provided.

Step B4: - Electronics for controlling the supply of power and the operation of the device are provided.

Step B5: - The heating assembly, power supply, and electronics are arranged within the housing and coupled to each other. An airflow path is defined extending from the airflow inlet of the housing, through the heating assembly, and to the airflow outlet of the housing.

Step B6: - The competence of the airflow path of the aerosol-generating device is tested using the method set out in the flowchart of figure 4.

Step B7: - If the airflow path is deemed to be competent, the aerosol-generating device may be packaged for sale to consumers.

Step B8: - If the airflow path is not deemed to be competent, the aerosol-generating device may be sent for refurbishment or may be discarded.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A ± 5 percent (5%) of A.

## Claims

1. A method of quality testing an airflow path defined in a product (3010), the product (3010) comprising a plurality of component parts, each defining a portion of the airflow path, joined together to form the product (3010), the method comprising steps of;
pressurising the airflow path to a predetermined pressure;
monitoring pressure or airflow within the pressurised airflow path with a pressure sensor (3070) or flow meter for a predetermined period of time;
determining a leakage rate over the predetermined period of time; and
determining whether the leakage rate is greater than a permissible threshold leakage rate, wherein the product (3010) is an aerosol-generating device (100) or a heater assembly (1) for an aerosol-generating device (100), and
wherein the method is performed at an elevated temperature compared to ambient temperature.

2. A method according to claim 1 in which airflow path has an airflow inlet (106) defined through a first of the plurality of component parts and an airflow outlet (104) defined through a second of the plurality of component parts.

3. A method according to any preceding claim in which at least two of the plurality of component parts are joined together by mechanical press-fit interfaces to form the product (3010).

4. A method according to any preceding claim in which the airflow path is pressurised to a predetermined pressure of between 0.2 kPa and 1 kPa, for example between 0.3 kPa and 0.9 kPa, for example between 0.35 kPa and 0.8 kPa, for example between 0.4 kPa and 0.7 kPa, for example between 0.45 kPa and 0.6 kPa.

5. A method according to any preceding claim in which leakage from the pressurised airflow path is measured for a period of time of between 1 second and 4 seconds, for example between 1.5 seconds and 3 seconds, for example for about 2 seconds.

6. A method according to any preceding claim in which the permissible threshold leakage level is 5 ml/min, or 4.5 ml/min, or 4 ml/min, or 3 ml/min, or 2.5 ml/min, or 2 ml/min, or 1.5 ml/min, or 1 ml/min.

7. A method according to any preceding claim in which the step of pressurising the airflow path to a predetermined pressure includes pressurising the airflow path to a predetermined pressure for a predetermined stabilisation time.

8. A method according to any preceding claim in which the step of measuring leakage from the pressurised airflow path involves monitoring pressure within the pressurised airflow path.

9. A method according to any preceding claim in which the product (3010) is coupled to a test circuit, in which the test circuit comprises a source of pressurising gas, for example an air cylinder, a pressure regulator (3030), a coupling for allowing the test circuit to be coupled to the airflow path, a first valve (3040) operable to allow the airflow path to be pressurised, and a second valve (3050) operable to allow the airflow path to be depressurised.

10. A method according to any preceding claim in which the product (3010) is the heater assembly (1) and the heater assembly (1) comprises:
a first heater casing (2) comprising an air inlet (106);
a second heater casing (4) comprising an aerosol outlet (104); and
a heating chamber (6) for heating an aerosol-forming substrate (204), the heating chamber (6) being in fluid communication with both the air inlet (106) and aerosol outlet (104) to define an airflow pathway through the heater assembly (1).

11. A method according to claim 10, wherein the heating chamber (6) comprises a tubular heating chamber.

12. A method according to any of claims 1 to 9 in which the product (3010) is the aerosol-generating device (100) and the aerosol-generating device (100) comprises a housing (102) locating:
a heater assembly (1); and
a power supply (103) for supplying electrical power to the heater assembly (1).

13. A method according to any of claims 1 to 9 or 12, in which the product (3010) is the aerosol-generating device (100), and in which the aerosol-generating device (100) defines the airflow path between an aerosol-generating device inlet and an aerosol-generating device outlet (104), and in which the airflow path comprises an airflow pathway through the heater assembly (1).

14. A method according to any preceding claim in which the gas supplied to pressurise the airflow path is heated to a temperature of greater than 100 degrees Centigrade, for example, greater than 150 degrees Centigrade, for example greater than 200 degrees Centigrade.

15. A method of manufacturing a heater assembly (1) for an aerosol-generating device (100), the method comprising steps of:
providing a first heater casing (2) comprising an air inlet (106);
providing a second heater casing (4) comprising an aerosol outlet (104);
providing a heating chamber (6) for heating an aerosol-forming substrate (204) and arranging the heating chamber (6) such that it is in fluid communication with both the air inlet (106) and the air outlet (104) to define an airflow path through the heater assembly (1);
arranging the heating chamber (6) between the first and second heater casings (2, 4),
attaching the first and second heater casings (2, 4) to each other, and
quality testing the airflow path defined through the heater assembly (1) by;
pressurising the airflow path to a predetermined pressure;
monitoring pressure or airflow within the pressurised airflow path with a pressure sensor (3070) or flow meter for a predetermined period of time;
determining a leakage rate over the predetermined period of time; and
determining whether the leakage rate is equal to or greater than a permissible threshold leakage rate,
wherein quality testing the airflow path is performed at an elevated temperature compared to ambient temperature.

## Patentansprüche

1. Verfahren für ein Prüfen der Qualität eines in einem Produkt (3010) definierten Luftstromweges, das Produkt (3010) umfassend eine Mehrzahl von Komponententeilen, die jeweils einen Abschnitt des Luftstromweges definieren, die miteinander verbunden sind, um das Produkt (3010) zu bilden, das Verfahren umfassend die Schritte des:
Druckbeaufschlagens des Luftstromweges auf einen vorbestimmten Druck;
Überwachens des Drucks oder des Luftstroms innerhalb des druckbeaufschlagten Luftstromwegs mit einem Drucksensor (3070) oder einem Durchflussmesser für eine vorbestimmte Zeitdauer;
Bestimmens einer Leckrate über den vorbestimmten Zeitraum; und
Bestimmens, ob die Leckrate größer als eine zulässige Schwellenleckrate ist, wobei das Produkt (3010) eine Aerosolerzeugungsvorrichtung (100) oder eine Heizvorrichtungsbaugruppe (1) für eine Aerosolerzeugungsvorrichtung (100) ist, und
wobei das Verfahren bei einer im Vergleich zu der Umgebungstemperatur erhöhten Temperatur durchgeführt wird.

2. Verfahren nach Anspruch 1, wobei der Luftstromweg einen Luftstromeinlass (106), der durch ein erstes der Mehrzahl von Komponententeilen definiert ist, und einen
Luftstromauslass (104), der durch ein zweites der Mehrzahl von Komponententeilen definiert ist, aufweist.

3. Verfahren nach einem beliebigen vorhergehenden Anspruch, wobei wenigstens zwei der Mehrzahl von Komponententeilen durch mechanische Pressspassungsschnittstellen miteinander verbunden werden, um das Produkt (3010) zu bilden.

4. Verfahren nach einem beliebigen vorhergehenden Anspruch, wobei der Luftstromweg auf einen vorbestimmten Druck zwischen 0,2 kPa und 1 kPa, beispielsweise zwischen 0,3 kPa und 0,9 kPa, beispielsweise zwischen 0,35 kPa und 0,8 kPa, beispielsweise zwischen 0,4 kPa und 0,7 kPa, beispielsweise zwischen 0,45 kPa und 0,6 kPa druckbeaufschlagt wird.

5. Verfahren nach einem beliebigen vorhergehenden Anspruch, wobei die Leckage aus dem druckbeaufschlagten Luftstromweg über einen Zeitraum zwischen 1 Sekunde und 4 Sekunden, beispielsweise zwischen 1,5 Sekunden und 3 Sekunden, beispielsweise über etwa 2 Sekunden, gemessen wird.

6. Verfahren nach einem beliebigen vorhergehenden Anspruch, wobei der zulässige Schwellenleckagepegel 5 ml/min oder 4,5 ml/min oder 4 ml/min oder 3 ml/min oder 2,5 ml/min oder 2 ml/min oder 1,5 ml/min oder 1 ml/min beträgt.

7. Verfahren nach einem beliebigen vorhergehenden Anspruch, wobei der Schritt des Druckbeaufschlagens des Luftstromweges auf einen vorbestimmten Druck ein Druckbeaufschlagen des Luftstromweges auf einen vorbestimmten Druck für eine vorbestimmte Stabilisierungszeit einschließt.

8. Verfahren nach einem beliebigen vorhergehenden Anspruch, wobei der Schritt des Messens der Leckage aus dem druckbeaufschlagten Luftstromweg ein Überwachen des Drucks innerhalb des druckbeaufschlagten Luftstromweges einschließt.

9. Verfahren nach einem beliebigen vorhergehenden Anspruch, wobei das Produkt (3010) mit einer Prüfschaltung verbunden ist, die eine Druckgasquelle, beispielsweise einen Luftzylinder, einen Druckregler (3030), eine Kopplung, über die die Prüfschaltung mit dem Luftstromweg verbunden werden kann, ein erstes Ventil (3040), das betätigbar ist, damit der Luftstromweg druckbeaufschlagt werden kann, und ein zweites Ventil (3050) umfasst, das betätigbar ist, damit der Luftstromweg drucklos gemacht werden kann.

10. Verfahren nach einem beliebigen vorhergehenden Anspruch, wobei das Produkt (3010) die Heizvorrichtungsbaugruppe (1) ist und die Heizvorrichtungsbaugruppe (1) umfasst:
ein erstes Heizvorrichtungsgehäuse (2), umfassend einen Lufteinlass (106);
ein zweites Heizvorrichtungsgehäuse (4), umfassend einen Aerosolauslass (104); und
eine Heizkammer (6) für ein Erwärmen eines aerosolbildenden Substrats (204), die Heizvorrichtung (6) in Fluidverbindung sowohl mit dem Lufteinlass (106) als auch dem Aerosolauslass (104) stehend, um einen Luftstromweg durch die Heizvorrichtungsbaugruppe (1) zu definieren.

11. Verfahren nach Anspruch 10, wobei die Heizkammer (6) eine rohrförmige Heizkammer umfasst.

12. Verfahren nach einem der Ansprüche 1 bis 9, wobei das Produkt (3010) die Aerosolerzeugungsvorrichtung (100) ist und die Aerosolerzeugungsvorrichtung (100) ein Gehäuse (102) umfasst, in dem angeordnet ist:
eine Heizvorrichtungsbaugruppe (1), und
eine Energieversorgung (103) für ein Zuführen von elektrischer Energie zu der Heizvorrichtungsbaugruppe (1).

13. Verfahren nach einem der Ansprüche 1 bis 9 oder 12, wobei das Produkt (3010) die Aerosolerzeugungsvorrichtung (100) ist, und wobei die Aerosolerzeugungsvorrichtung (100) den Luftstromweg zwischen einem Aerosolerzeugungsvorrichtungseinlass und einem Aerosolerzeugungsvorrichtungsauslass (104) definiert, und wobei der Luftstromweg einen Luftstromweg durch die Heizvorrichtungsbaugruppe (1) umfasst.

14. Verfahren nach einem beliebigen vorhergehenden Anspruch, wobei das für ein Druckbeaufschlagen des Luftstromweges zugeführte Gas auf eine Temperatur von mehr als 100 Grad Celsius, beispielsweise mehr als 150 Grad Celsius, beispielsweise mehr als 200 Grad Celsius, erwärmt wird.

15. Verfahren für ein Herstellen einer Heizvorrichtungsbaugruppe (1) für eine Aerosolerzeugungsvorrichtung (100), das Verfahren umfassend die Schritte des:
Vorsehens eines ersten Heizvorrichtungsgehäuses (2), umfassend einen Lufteinlass (106);
Vorsehens eines zweiten Heizvorrichtungsgehäuses (4), umfassend einen Aerosolauslass (104);
Vorsehens einer Heizkammer (6) für ein Erwärmen eines aerosolbildenden Substrats (204) und Anordnen der Heizkammer (6), sodass sie in Fluidverbindung sowohl mit dem Lufteinlass (106) als auch dem Luftauslass (104) steht, um einen Luftstromweg durch die Heizvorrichtungsbaugruppe (1) zu definieren;
Anordnens der Heizkammer (6) zwischen dem ersten und dem zweiten Heizvorrichtungsgehäuse (2, 4),
Befestigens des ersten und des zweiten Heizvorrichtungsgehäuses (2, 4) aneinander, und Prüfens der Qualität des Luftstromweges, der durch die Heizvorrichtungsbaugruppe (1) definiert ist;
Druckbeaufschlagens des Luftstromweges auf einen vorbestimmten Druck;
Überwachens des Drucks oder des Luftstroms innerhalb des druckbeaufschlagten Luftstromwegs mit einem Drucksensor (3070) oder einem Durchflussmesser für eine vorbestimmte Zeitdauer;
Bestimmens einer Leckrate über den vorbestimmten Zeitraum; und
Bestimmens, ob die Leckrate gleich oder größer als eine zulässige Schwellenleckrate ist,
wobei ein Prüfen der Qualität des Luftstromweges bei einer im Vergleich zu der Umgebungstemperatur erhöhten Temperatur durchgeführt wird.

## Revendications

1. Procédé d'essai de qualité d'un trajet d'écoulement d'air défini dans un produit (3010), le produit (3010) comprenant une pluralité de parties constitutives, chacune définissant une portion du trajet d'écoulement d'air, jointes ensemble pour former le produit (3010), le procédé comprenant les étapes consistant à ; mettre sous pression le trajet d'écoulement d'air jusqu'à une pression prédéterminée ;
surveiller la pression ou l'écoulement d'air au sein du trajet d'écoulement d'air sous pression avec un capteur de pression (3070) ou un débitmètre pendant une période de temps prédéterminée ; déterminer un taux de fuite sur la période de temps prédéterminée ; et
déterminer si le taux de fuite est supérieur à un taux de fuite seuil admissible,
dans lequel le produit (3010) est un dispositif de génération d'aérosol (100) ou un ensemble de chauffage (1) pour un dispositif de génération d'aérosol (100), et
dans lequel le procédé est réalisé à une température élevée comparée à la température ambiante.

2. Procédé selon la revendication 1, dans lequel le trajet d'écoulement d'air a une entrée d'écoulement d'air (106) définie à travers une première de la pluralité de parties constitutives et une sortie d'écoulement d'air (104) définie à travers une deuxième de la pluralité de parties constitutives.

3. Procédé selon l'une quelconque des revendications précédentes, dans lequel au moins deux de la pluralité de parties constitutives sont jointes ensemble par des interfaces mécaniques d'ajustement par pression pour former le produit (3010).

4. Procédé selon l'une quelconque des revendications précédentes, dans lequel le trajet d'écoulement d'air est mis sous pression jusqu'à une pression prédéterminée d'entre 0,2 kPa et 1 kPa, par exemple entre 0,3 kPa et 0,9 kPa, par exemple entre 0,35 kPa et 0,8 kPa, par exemple entre 0,4 kPa et 0,7 kPa, par exemple entre 0,45 kPa et 0,6 kPa.

5. Procédé selon l'une quelconque des revendications précédentes, dans lequel la fuite provenant du trajet d'écoulement d'air sous pression est mesurée pendant une période de temps d'entre 1 seconde et 4 secondes, par exemple entre 1,5 seconde et 3 secondes, par exemple pendant environ 2 secondes.

6. Procédé selon l'une quelconque des revendications précédentes, dans lequel le niveau de fuite seuil admissible est de 5 ml/min, ou 4,5 ml/min, ou 4 ml/min, ou 3 ml/min, ou 2,5 ml/min, ou 2 ml/min, ou 1,5 ml/min, ou 1 ml/min.

7. Procédé selon l'une quelconque des revendications précédentes, dans lequel l'étape de mise sous pression du trajet d'écoulement d'air jusqu'à une pression prédéterminée comporte la mise sous pression du trajet d'écoulement d'air jusqu'à une pression prédéterminée pendant un temps de stabilisation prédéterminé.

8. Procédé selon l'une quelconque des revendications précédentes, dans lequel l'étape de mesure de fuite provenant du trajet d'écoulement d'air sous pression implique la surveillance de la pression au sein du trajet d'écoulement d'air sous pression.

9. Procédé selon l'une quelconque des revendications précédentes, dans lequel le produit (3010) est couplé à un circuit d'essai, dans lequel le circuit d'essai comprend une source de gaz de mise sous pression, par exemple une bouteille d'air comprimé, un régulateur de pression (3030), un couplage pour permettre au circuit d'essai d'être couplé au trajet d'écoulement d'air, une première vanne (3040) pouvant fonctionner pour permettre la mise sous pression du trajet d'écoulement d'air, et une deuxième vanne (3050) pouvant fonctionner pour permettre la réduction de pression du trajet d'écoulement d'air.

10. Procédé selon l'une quelconque des revendications précédentes, dans lequel le produit (3010) est l'ensemble de chauffage (1) et l'ensemble de chauffage (1) comprend :
un premier boîtier de dispositif de chauffage (2) comprenant une entrée d'air (106) ;
un deuxième boîtier de dispositif de chauffage (4) comprenant une sortie d'aérosol (104) ; et
une chambre de chauffage (6) pour chauffer un substrat formant aérosol (204), la chambre de chauffage (6) étant en communication fluidique à la fois avec l'entrée d'air (106) et la sortie d'aérosol (104) pour définir un passage d'écoulement d'air à travers l'ensemble de chauffage (1).

11. Procédé selon la revendication 10, dans lequel la chambre de chauffage (6) comprend une chambre de chauffage tubulaire.

12. Procédé selon l'une quelconque des revendications 1 à 9, dans lequel le produit (3010) est le dispositif de génération d'aérosol (100) et le dispositif de génération d'aérosol (100) comprend un logement (102) où sont localisés :
un ensemble de chauffage (1) ; et
une alimentation électrique (103) pour alimenter en puissance électrique l'ensemble de chauffage (1).

13. Procédé selon l'une quelconque des revendications 1 à 9 ou 12, dans lequel le produit (3010) est le dispositif de génération d'aérosol (100), et dans lequel le dispositif de génération d'aérosol (100) définit le trajet d'écoulement d'air entre une entrée du dispositif de génération d'aérosol et une sortie (104) du dispositif de génération d'aérosol, et dans lequel le trajet d'écoulement d'air comprend un passage d'écoulement d'air à travers l'ensemble de chauffage (1).

14. Procédé selon l'une quelconque des revendications précédentes, dans lequel le gaz fourni pour mettre sous pression le trajet d'écoulement d'air est chauffé jusqu'à une température supérieure à 100 degrés centigrades, par exemple supérieure à 150 degrés centigrades, par exemple supérieure à 200 degrés centigrades.

15. Procédé de fabrication d'un ensemble de chauffage (1) pour un dispositif de génération d'aérosol (100), le procédé comprenant les étapes consistant à :
fournir un premier boîtier de dispositif de chauffage (2) comprenant une entrée d'air (106) ;
fournir un deuxième boîtier de dispositif de chauffage (4) comprenant une sortie d'aérosol (104) ;
fournir une chambre de chauffage (6) pour chauffer un substrat formant aérosol (204) et agencer la chambre de chauffage (6) de sorte qu'elle est en communication fluidique à la fois avec l'entrée d'air (106) et la sortie d'air (104) pour définir un trajet d'écoulement d'air à travers l'ensemble de chauffage (1) ;
agencer la chambre de chauffage (6) entre les premier et deuxième boîtiers de dispositif de chauffage (2, 4),
fixer les premier et deuxième boîtiers de dispositif de chauffage (2, 4) l'un à l'autre, et
mettre à l'essai de qualité du trajet d'écoulement d'air défini à travers l'ensemble de chauffage (1) par ;
la mise sous pression du trajet d'écoulement d'air jusqu'à une pression prédéterminée ;
la surveillance de la pression ou de l'écoulement d'air au sein du trajet d'écoulement d'air sous pression avec un capteur de pression (3070) ou un débitmètre pendant une période de temps prédéterminée ;
la détermination d'un taux de fuite sur la période de temps prédéterminée ; et
le fait de déterminer si le taux de fuite est supérieur ou égal à un taux de fuite seuil admissible,
dans lequel l'essai de qualité du trajet d'écoulement d'air est réalisé à une température élevée comparée à la température ambiante.
